# EUROPÄISCHE PATENTSCHRIFT

(11) **EP 3 305 473 B1**
(45) Veröffentlichungstag und Bekanntmachung des Hinweises auf die Patenterteilung: **21.06.2023**
(21) Anmeldenummer: 17194906.8
(22) Anmeldetag: 05.10.2017
(51) Int. Cl.: B25F 5/00, B25F 5/02

(54) **ELEKTROHANDWERKZEUGMASCHINE**
ELECTRIC HAND-HELD MACHINE TOOL
MACHINE-OUTIL À MAIN ÉLECTRIQUE

(30) Priorität: 05.10.2016 DE 102016118805
(43) Veröffentlichungstag der Anmeldung: 11.04.2018
(73) Patentinhaber: Metabowerke GmbH, 72622 Nürtingen (DE)
(72) Erfinder: Schumayer, Florian, 73235 Weilheim/Teck (DE); Scheib, Sebastian, 76848 Spirkelbach (DE); Kielblock, Frauke, 73061 Ebersbach (DE)
(74) Vertreter: Markfort, Iris-Anne Lucie

(56) Entgegenhaltungen:
- EP-A1- 3 321 039
- EP-A2- 2 003 761
- WO-A1-2013/138955
- DE-C2- 3 844 093
- DE-T5-112013 006 567
- US-A1- 2009 108 806
- US-A1- 2010 062 326

## Beschreibung

Die Erfindung betrifft eine Elektrohandwerkzeugmaschine mit einem Gehäuse mit wenigstens zwei Gehäuseteilen, in dem zumindest teilweise eine Antriebseinheit zum Antrieb einer Werkzeugspindel der Elektrohandwerkzeugmaschine aufgenommen ist, sowie mit einem Aufnahmeabschnitt, der zur lösbaren Aufnahme eines Akkupacks ausgebildet ist, wobei der Aufnahmeabschnitt integral mit wenigstens einem Gehäuseteil ausgebildet ist.

Es ist bekannt, Elektrohandwerkzeugmaschinen zur Stromversorgung mit Akkupacks zu verbinden. Weiterhin ist bekannt, dass im Bereich von Elektrohandwerkzeugmaschinen von den Herstellern unterschiedliche Akkupacks mit verschiedenen Baugrö-ßen und/oder Nennspannungen angeboten werden, wobei jeder Akkupack von seiner Baugröße, seiner Nennspannung und/oder seiner Leistung einem bestimmten Typ von Elektrohandwerkzeugmaschine zugeordnet werden kann. So benötigt beispielsweise ein großer Winkelschleifer eine andere Nennspannung und/oder Leistung als ein kleiner Schrauber.

Auch werden in der Regel verschiedene Akkutypen angeboten, wie beispielsweise NiCd, NiMh- und Li-Ion-Akkus. Aufgrund ihrer hohen Leistungsdichte sind insbesondere die Li-lon-Akkupacks weit verbreitet. Die Nennspannung und Kapazität des jeweils verwendeten Akkupacks bestimmt in der Regel Leistung und Laufzeit der Elektrohandwerkzeugmaschine.

In der Vergangenheit hat sich gezeigt, dass Elektrohandwerkzeugmaschinen oftmals keinen kontinuierlich hohen Energiebedarf aufweisen, sondern dass gegebenenfalls auch kurzzeitig sehr hohe Leistungsspitzen erforderlich sein können, wie beispielsweise bei großen Winkelschleifern oder Kettensägen.

Ferner sind insbesondere im Zusammenhang mit Li-lon-Akkupacks strenge Richtlinien zur Transportsicherheit und Handhabung zu beachten, wenn diese eine bestimmte Kapazität überschreiten. Aus diesem Grund können Akkupacks mit einer geringeren Nennspannung und Kapazität (beispielsweise 18-V-Akkupacks) für die Hersteller und Anbieter von Elektrohandwerkzeugmaschinen gegenüber Akkupacks mit einer höheren Nennspannung und Kapazität (beispielsweise 36-V-Akkus) vorteilhaft sein, obwohl deren Nennspannung und Kapazität aus Sicht eines Verbrauchers nachteilig ist.

Um diesen geschilderten Problemen und Anforderungen aus der Praxis Rechnung zu tragen, wurden in der Vergangenheit unterschiedliche Lösungsansätze verfolgt. So ist es beispielsweise aus der DE 38 44 093 C2 bekannt, das Maschinengehäuse einer Elektrohandwerkzeugmaschine mit wenigstens zwei Aufnahmevorrichtungen zur Aufnahme jeweils eines Akkupacks zu versehen. Die Akkupacks werden innerhalb der Aufnahmevorrichtung elektrisch kontaktiert und sind in Reihe geschaltet und mit dem Antriebsmotor über einen Schutzschalter mit einem Steuerschaltkreis verbindbar. Um die Akkupacks vor einer unerwünschten Tiefentladung zu bewahren, kann ein die Öffnung des Schutzschalters bewirkendes Steuersignal erzeugt werden. Zusätzlich weist der Steuerschaltkreis Leuchtglieder auf, von denen je eines einem der Akkupacks zugeordnet ist und bei Unterschreiten von dessen minimal zulässigen Ladezustand ein Lichtsignal erzeugt. In diesem Zusammenhang wird auch auf die DE 11 2013 006 567 T5, welche den Oberbegriff von Anspruch 1 zeigt, und die WO 2013/138955 A1 verwiesen Weiterhin ist es aus dem Stand der Technik, beispielsweise der EP 2 307 174 B1, bekannt, zwei Akkupacks über eine separate Kopplungsvorrichtung mit der Elektrohandwerkzeugmaschine zu verbinden, wobei die Elektrohandwerkzeugmaschine eine einzige Schnittstelle aufweist, über die sie mechanisch und elektrisch mit einem Akkupack verbindbar ist. Durch Verwendung einer solchen separaten Kopplungsvorrichtung bzw. eines solchen Adapters können anstelle des für die Elektrohandwerkzeugmaschine vorgesehenen einen Akkupacks (beispielsweise anstelle eines 36-V-Akkupacks) auch zwei (beispielsweise zwei 18-V-) Akkupacks angeschlossen werden.

Weitere Lösungen mit einem separat ausgebildeten Adapter sind beispielsweise auch in der WO 2011/099349 A1, in der US 2009/0108806 A1 und der US 2010/0062326 A1 gezeigt und beschrieben.

Vorteilhaft an solchen Adapterlösungen ist, dass Maschinen mit einer einzigen Akkupack-Aufnahme nachträglich aufgerüstet werden können, das heißt, dass der Anwender durch den Kauf eines zusätzlichen Adapters in die Lage versetzt wird, anstelle eines einzigen Akkupacks auch mehrere Akkupacks mit der Elektrohandwerkzeugmaschine zu verbinden oder Akkupacks, die mit Schiebesitz ausgebildet sind, im Zusammenhang mit einer Maschine zu benutzen, die mit einem Stecksitz für ein Akkupack zum Einführen in die Maschine ausgebildet ist.

Nachteilig bei dieser Lösung ist jedoch, dass ein solcher Adapter von dem Anwender verloren werden kann. Weiterhin sind auch Missbrauchsfälle bekannt geworden, bei denen ein Anwender mehrere Akkupacks mit sehr hoher Leistung über einen solchen Adapter mit der Elektrohandwerkzeugmaschine verbunden hat. Dies beeinträchtigt sowohl die Lebensdauer der Elektrohandwerkzeugmaschine als auch insbesondere die Sicherheit des Anwenders.

Eine Betrachtung unterschiedlicher Märkte hat gezeigt, dass bei gleichartigen Maschinen manche Anwender die Nutzung von zwei Akkupacks gegenüber der Nutzung eines einzigen Akkupacks mit beispielsweise doppelter Leistung bevorzugen, während es in anderen Ländern genau umgekehrt sein mag. Um auf die marktspezifischen Besonderheiten der Käufer zu reagieren, wurden in der Vergangenheit entweder zwei Werkzeugmaschinentypen mit unterschiedlichen Gehäusekarkassen gebaut und angeboten, oder ein zusätzlicher Adapter zur Anpassung der Werkzeugmaschine auf die gewünschte Akku-Betriebsart angeboten. Beide dieser Lösungen sind mit einem erheblichen Kosten- und Montage-Mehraufwand auf Seiten der Hersteller verbunden.

Dies gilt in gleicher Weise, wenn die Werkzeugmaschine beispielsweise aufgrund unterschiedlicher Anwenderwünsche mit unterschiedlich großen Akkupacks, z.B. in Europa mit einem 36V Akkupack und in den USA mit einem 72V Akkupack betreibbar sein soll. Sofern der größere Akkupack nicht exakt die gleichen Abmessungen aufweist, lässt er sich mit der an dem Gehäuse vorgesehenen Akkupackaufnahme nicht verbinden.

Demgegenüber besteht eine Aufgabe der vorliegenden Erfindung darin, eine einfache und kostengünstige Lösung bereitzustellen, die es ermöglicht, Elektrohandwerkzeugmaschinen an die kundenspezifischen Wünsche bezüglich der Akku-Versorgung anzupassen, ohne die vorstehend genannten Nachteile in Kauf nehmen zu müssen.

Demgemäß schlägt die vorliegende Erfindung eine Elektrohandwerkzeugmaschine mit den Merkmalen des Anspruchs 1 vor. Diese umfasst ein Gehäuse mit wenigstens zwei Gehäuseteilen, in dem zumindest teilweise eine Antriebseinheit zum Antrieb einer Werkzeugspindel der Elektrohandwerkzeugmaschine aufgenommen ist, sowie einen Aufnahmeabschnitt, der zur lösbaren Aufnahme eines Akkupacks ausgebildet ist, wobei der Aufnahmeabschnitt integral mit wenigstens einem Gehäuseteil ausgebildet ist und eine Struktur zur mechanischen Befestigung des Akkupacks aufweist. Weiterhin umfasst die Elektrohandwerkzeugmaschine erfindungsgemäß ein separat von dem Gehäuse ausgebildetes Aufnahmemodul mit wenigstens einer Aufnahmevorrichtung, die zur lösbaren Aufnahme eines Akkupacks ausgebildet ist und ein aufgenommenes Akkupack elektrisch mit der Antriebseinheit zu verbinden vermögen. Dabei weist das Aufnahmemodul eine spezifische Befestigungskontur auf, die auf die Ausgestaltung des Aufnahmeabschnitts des Gehäuses abgestimmt ist, und ist im montierten Zustand der Elektrohandwerkzeugmaschine für den Anwender unlösbar elektrisch mit der Antriebseinheit und unlösbar mechanisch mit dem Gehäuse verbunden.

Die erfindungsgemäße Ausgestaltung einer Elektrohandwerkzeugmaschine ist insbesondere im Hinblick auf die Montage derselben besonders vorteilhaft. So ist es möglich, ein und dasselbe Gehäuse sowohl für solche Elektrohandwerkzeugmaschinen vorzusehen, die im späteren Gebrauch nur einen einzigen Akkupack aufnehmen können, als auch für solche, die im späteren Gebrauch ein davon abweichendes (z.B. größeres oder kleineres) Akkupack oder sogar mehrere Akkupacks aufnehmen können. Hierdurch können Werkzeuge bei der Herstellung der Gehäuseteile eingespart und die Montage des Gehäuses vereinfacht werden. Vorteilhaft werden durch eine solche Gleichteilestrategie Entwicklungskosten, Herstellungskosten und Montagekosten verringert. Im Rahmen der Montage wird dann durch Vorsehen eines zusätzlichen Aufnahmemoduls die Elektrohandwerkzeugmaschine für den jeweiligen Markt adaptiert.

Es kann darüber hinaus vorgesehen sein, dass das Aufnahmemodul eine oder mehrere weitere Funktionseinheiten, beispielsweise zum Übertragen von Daten per Funksignal, zum Empfangen von Daten per Funksignal, oder zum Einlesen oder Auslesen von Daten über eine zusätzliche Schnittstelle, aufweist.

Auf diese Weise kann das Aufnahmemodul auch dazu genutzt werden, die Werkzeugmaschine mit weiteren Funktionen zu versehen. Bei einer solchen Ausgestaltung muss die Aufnahmevorrichtung des Aufnahmemoduls nicht zwingend von dem ohnehin am Gehäuse der Werkzeugmaschine vorgesehenen Aufnahmeabschnitt abweichen. Stattdessen kann durch das Vorsehen von wenigstens einer Funktionseinheit der Werkzeugmaschine eine zusätzliche Funktion zugeordnet werden.

Beispielsweise kann es aus Anwendersicht sinnvoll sein, dass die Werkzeugmaschine über das Aufnahmemodul auch eine Funkverbindung bereitstellt, mittels derer die Werkzeugmaschine beispielsweise ein Funksignal nach außen abgibt, wenn sie eingeschaltet wird oder wenn sie ausgeschaltet wird. Diese Funktionalität kann insbesondere dazu genutzt werden, weitere in Funkverbindung stehende Vorrichtungen, wie einen Staubsauger oder dergleichen, über den Betriebsstatus der Werkzeugmaschine zu informieren, so dass diese in Abhängigkeit von den von Werkzeugmaschine abgegebenen Signalen ihrerseits sich ein- oder ausschalten können.

Alternativ oder zusätzlich kann es auch sinnvoll sein, dass die Werkzeugmaschine mittels des Aufnahmemoduls Daten empfangen, ausgeben oder ein- bzw. auslesen kann. Dies kann beispielsweise über ein Funkmodul zum Datenempfang, über eine Schnittstelle wie USB oder dergleichen oder über einen zusätzlichen Scanner erfolgen. Beispielsweise kann der Anwender über eine solche Funktionseinheit Maschinenparameter auf die Elektrowerkzeugmaschine aufspielen, die Werkzeugmaschine personalisieren (z.B. mit seinem Namen und Adresse oder dergleichen), Fehlerdaten auslesen und vieles mehr.

Soll die Elektrohandwerkzeugmaschine im späteren Gebrauch nur das in den am Gehäuse vorgesehenen Aufnahmeabschnitt einsetzbare Akkupack aufnehmen können und nur über die standardmäßigen Funktionseinheiten ohne zusätzliche Funktionseinheit wie vorstehend beschrieben, verfügen, wird in dem Aufnahmeabschnitt des Gehäuses eine Kontaktplatte vorgesehen, die elektrische Kontakte in Form von Kontaktschwertern oder dergleichen aufweist und fest verdrahtet mit der elektrischen Antriebseinheit der Elektrohandwerkzeugmaschine verbunden ist. Der Aufnahmeabschnitt ist dabei so gestaltet, dass ein Akkupack aufgeschoben, aufgesetzt oder eingeschoben werden kann und von dem Aufnahmeabschnitt mechanisch lösbar fixiert ist. Die elektrischen Kontakte der Kontaktplatte stellen im montierten Zustand die gewünschte elektrische Verbindung zwischen dem eingesetzten Akkupack und der Antriebseinheit der Elektrohandwerkzeugmaschine her.

Soll die Elektrohandwerkzeugmaschine jedoch mit mehreren Aufnahmen für mehrere Akkupacks oder mit einer größeren bzw. kleineren Aufnahme und/oder mit zusätzlichen Funktionseinheiten verkauft werden, so wird auf das Vorsehen der Kontaktplatte verzichtet und stattdessen das erfindungsgemäße Aufnahmemodul in dem Aufnahmeabschnitt des Gehäuses aufgenommen. Dabei erfolgt sowohl die elektrische Verbindung des Aufnahmemoduls mit der Antriebseinheit als auch die mechanische Verbindung des Aufnahmemoduls mit dem Gehäuse in einer solchen Weise, dass diese im späteren Gebrauch von dem Anwender nicht oder nur unter erheblichem Aufwand gelöst werden kann. Selbstverständlich ist es für einen Anwender nicht vollkommen unmöglich, die hergestellte elektrische und/oder mechanische Verbindung wieder zu lösen, jedoch sein diese in der Weise ausgestaltet, das für den Anwender ersichtlich ist, dass ein Lösen der elektrischen und/oder mechanischen Verbindung nicht dem vorgesehenen Zweck entspricht und somit missbräuchlich ist.

Das Aufnahmemodul ist in montiertem Zustand der Elektrohandwerkzeugmaschine derart innerhalb des Aufnahmeabschnitts des Gehäuses aufgenommen, dass es für den Anwender von außen betrachtet einen Teil des Gehäuses bildet, so dass dieser im Regelfall nicht versuchen wird, dieses wieder von dem Gehäuse der Elektrohandwerkzeugmaschine zu lösen. Die elektrische Verbindung ist innerhalb des Gehäuses aufgenommen und für den Anwender im montierten Zustand von außen nicht zugänglich.

Das Gehäuse bezeichnet vorliegend den Teil der Elektrohandwerkzeugmaschine, der diese umgibt, beispielsweise die Gehäuseteile, die die Antriebseinheit zumindest teilweise aufnehmen, die Gehäuseteile, die das Getriebe zumindest teilweise aufnehmen, sowie die Gehäuseteile, die einen Griff der Elektrohandwerkzeugmaschine ausbilden.

Vorliegend ist angegeben, dass das Aufnahmemodul wenigstens eine Aufnahmevorrichtung umfasst, die zur lösbaren Aufnahme eines Akkupacks ausgebildet ist.

Selbstverständlich ist es jedoch auch denkbar, eines oder mehrere Aufnahmemodule in der vorstehend beschriebenen Weise anzubringen, die zwei oder mehr als zwei Aufnahmevorrichtungen umfassen und somit für die Aufnahme von zwei oder mehr als zwei Akkupacks ausgebildet sind.

Es kann weiterhin vorgesehen sein, dass das Gehäuse im Bereich des Aufnahmeabschnitts wenigstens zwei Vorsprünge, insbesondere zwei Führungsschienen, umfasst, die zur lösbaren Aufnahme und Befestigung eines Akkupacks dienen, und dass das Aufnahmemodul eine Befestigungskontur aufweist, die im montierten Zustand zur formschlüssigen Befestigung an dem Gehäuse mit den wenigstens zwei Vorsprüngen des Aufnahmeabschnitts des Gehäuses zusammenzuwirken vermag

Wie bereits vorstehend beschrieben, ist der Aufnahmeabschnitt der Elektrohandwerkzeugmaschine, der integral mit dem Gehäuse ausgebildet ist, in der Weise ausgestaltet, dass dieser zur Aufnahme und insbesondere auch zur mechanischen Befestigung eines aufgenommenen Akkupacks dient. Beispielsweise können zwei Vorsprünge, insbesondere zwei parallel laufende Führungsschienen vorgesehen sein, in die ein Akkupack mit einem entsprechenden Führungsteil eingeschoben wird. Alternative Ausgestaltungen mit einer kombinierten Schiebe- und Einsetzbewegung und dergleichen sind selbstverständlich ebenfalls denkbar und im Stand der Technik hinreichend beschrieben. Die Besonderheit ist vorliegend darin zu sehen, dass das separat ausgebildete Aufnahmemodul für eine vereinfachte Montage eine Befestigungskontur aufweist, die im montierten Zustand der Elektrohandwerkzeugmaschine mit den ohnehin am Aufnahmeabschnitt des Gehäuses vorgesehenen Befestigungsmitteln, beispielsweise in Form von Vorsprüngen, Führungsschienen oder dergleichen, zusammenwirkt.

Insbesondere kann vorgesehen sein, dass die Befestigungskontur des Aufnahmemoduls wenigstens einen teilweise umlaufenden Befestigungssteg umfasst, der in montiertem Zustand die wenigstens zwei Vorsprünge des Aufnahmeabschnitts zu hintergreifen vermag, um auf diese Weise eine Lösebewegung des Aufnahmemoduls in eine erste Richtung zu unterbinden. Selbstverständlich ist es vorliegend ebenfalls denkbar, anstelle eines teilweise umlaufenden Befestigungsstegs mehrere Stegabschnitte vorzusehen, die in montiertem Zustand mit den Vorsprüngen oder anderen Mitteln zur mechanischen Befestigung eines Akkupacks im Aufnahmebereich des Gehäuses zusammenzuwirken vermögen. Durch den Hintergriff in montiertem Zustand wird eine Auszugsbewegung des Aufnahmemoduls verhindert.

Weiterhin kann vorgesehen sein, dass die Befestigungskontur wenigstens einen Vorsprung umfasst, der in montiertem Zustand in eine Vertiefung des Gehäuses im Bereich des Aufnahmeabschnitts einzugreifen vermag, um auf diese Weise eine Lösebewegung des Aufnahmemoduls in eine zweite Richtung zu unterbinden. Selbstverständlich ist es auch denkbar, mehr als einen solchen Vorsprung vorzusehen. Auch ist eine Umkehrung möglich, das heißt, dass eine weitere Ausnehmung vorgesehen ist, in die ein Vorsprung des Gehäuses im Bereich des Aufnahmeabschnitts aufgenommen werden kann.

Dabei bezeichnet die zweite Richtung eine Richtung, die nicht mit der ersten Richtung übereinstimmt und insbesondere nicht zu dieser parallel verläuft. Beispielsweise kann die erste Richtung eine Auszugsbewegung in Richtung der Mittellängsachse Aufnahmeabschnitts am Gehäuse bezeichnen, während die zweite Richtung beispielsweise parallel zu der Längserstreckung der Vorsprünge, beispielsweise Führungsschienen, am Gehäuse im Bereich des Aufnahmeabschnitts, verläuft.

In einer denkbaren Ausgestaltung ist der Aufnahmeabschnitt des Gehäuses als Schiebesitz ausgestaltet, d.h. in der Weise, dass üblicherweise ein Akkupack in diesen eingeschoben wird. Dementsprechend bezeichnet die zweite Richtung die Richtung einer solchen Schiebebewegung, während die erste Richtung eine hierzu quer orientierte Richtung ist, beispielsweise senkrecht hierzu. Während eine Auszugsrichtung in die erste Richtung auch im Falle eines aufgenommenen Akkupacks durch einen Hintergriff der am Aufnahmeabschnitt vorgesehenen Führungsschienen verhindert wird, soll der Akkupack lösbar an dem Aufnahmeabschnitt befestigt sein. Gegebenenfalls weist der Akkupack selbst Sicherungsmittel, beispielsweise eine Rasteinrichtung oder dergleichen zur zusätzlichen lösbaren Sicherung gegen eine Auszugsbewegung entlang der Führungsschienen, d.h. in einer zweiten Richtung auf. Das Aufnahmemodul indes soll unlösbar an dem Aufnahmeabschnitt aufgenommen sein und nutzt hierfür beispielsweise einen Vorsprung wie eine Rippe oder dergleichen, der oder die unlösbar mit einer Ausnehmung oder einem Gegenvorsprung am Aufnahmeabschnitt zusammenwirken und so eine Auszugsbewegung in die zweite Richtung sicher verhindern kann.

Weiterhin kann vorgesehen sein, dass die Aufnahmevorrichtung bzw. Aufnahmevorrichtungen des Aufnahmemoduls elektrische Kontakte zur elektrischen Verbindung des aufgenommenen Akkupacks aufweist bzw. aufweisen, die im montierten Zustand der Elektrohandwerkzeugmaschine elektrisch mit der Antriebseinheit verbunden sind. Insbesondere können Kontaktelemente wie Kontaktschwerter oder dergleichen angeordnet sein, die in bekannter Weise eine elektronische Kontaktierung ermöglichen, wenn ein Akkupack in die korrespondierende Aufnahmevorrichtung am Aufnahmemodul eingesetzt ist.

Zudem kann vorgesehen sein, dass das Gehäuse im Bereich des Aufnahmeabschnitts wenigstens einen Durchbruch der Gehäusewand umfasst, durch den sich im montierten Zustand wenigstens eine elektrische Leitung zur elektrischen Verbindung mit den elektrischen Kontakten des Aufnahmemoduls erstrecken kann. Hierdurch kann eine einfache und zuverlässige Montage des Aufnahmemoduls erreicht werden.

Schließlich kann vorgesehen sein, dass jede Aufnahmevorrichtung des Aufnahmemoduls wenigstens zwei Vorsprünge, insbesondere zwei Führungsschienen, umfasst, die zur lösbaren Aufnahme und Befestigung eines zugeordneten Akkupacks dienen. Dabei können die Vorsprünge in gleicher Weise oder andersartig wie bzw. als die Vorsprünge des Aufnahmeabschnitts ausgebildet sein. Entscheidend ist dabei nur, dass diese mit der zugehörigen Befestigungskontur der aufzunehmenden Akkupacks zusammenwirken können, um diese sicher aufzunehmen und gegebenenfalls zu befestigen. Selbstverständlich kann ein Vorsprung auch derart ausgebildet sein, dass die beiden benachbarten Aufnahmevorrichtungen des Aufnahmemoduls diesen zur lösbaren Aufnahme und Befestigung eines zugeordneten Akkupacks nutzen können.

Neben einer Elektrohandwerkzeugmaschine mit den vorstehend beschriebenen Merkmalen betrifft die vorliegende Erfindung auch ein Verfahren zur Herstellung derselben, umfassend die Schritte Einsetzen derjenigen Komponenten der Elektrohandwerkzeugmaschine in wenigstens ein erstes Gehäuseteil der Elektrohandwerkzeugmaschine, die im späteren Gebrauch im Gehäuse der Elektrohandwerkzeugmaschine wenigstens teilweise aufgenommen sind, Einsetzen eines Aufnahmemoduls in den Aufnahmeabschnitt des Gehäuses; Herstellen einer elektrischen Verbindung des Aufnahmemoduls mit der Antriebseinheit der Elektrohandwerkzeugmaschine; Herstellen einer mechanischen Verbindung des Aufnahmemoduls mit dem Gehäuse der Elektrohandwerkzeugmaschine. Dabei sind die elektrische Verbindung und die mechanische Verbindung für den Anwender im montierten Zustand unlösbar.

Der Schritt Herstellen einer mechanischen Verbindung kann dabei insbesondere die nachfolgenden Teilschritte umfassen: Einführen der Befestigungskontur des Aufnahmemoduls in den Aufnahmeabschnitt und Verbinden, insbesondere Verschrauben, des wenigstens zweiten Gehäuseteils mit dem wenigstens einen weiteren Gehäuseteil. Auf diese Weise kann die Befestigungskontur im montierten Zustand der Elektrohandwerkzeugmaschine mit wenigstens zwei Vorsprünge, insbesondere zwei Führungsschienen, des Aufnahmeabschnitts, die zur lösbaren Aufnahme und Befestigung eines Akkupacks dienen, zur formschlüssigen Befestigung an dem Gehäuse zusammenwirken.

Weitere Merkmale und Besonderheiten der Erfindung sind zudem in der nachfolgenden Figurenbeschreibung und den Ansprüchen ausgeführt.

Eine Ausführungsform der Erfindung ist in den Figuren gezeigt und wird unter Bezugnahme auf diese detaillierter beschrieben. Dabei sind bei dieser Ausführungsform einzelne Merkmale in Kombination miteinander dargestellt, die nicht notwendigerweise kombiniert sein müssen, um zu der vorliegenden Erfindung zu kommen.

Es zeigen schematisch:
- Figur 1: eine isometrische Ansicht einer erfindungsgemäßen Elektrohandwerkzeugmaschine in der Endmontage;
- Figur 2: eine isometrische Ansicht eines eingebauten Aufnahmemoduls in einer Elektrohandwerkzeugmaschine gemäß der Figur 1;
- Figur 3: eine isometrische Ansicht des Aufnahmeabschnitts einer Elektrohandwerkzeugmaschine gemäß der Figur 1 oder 2;
- Figur 4: eine teilgeschnittene Ansicht des Aufnahmeabschnitts einer Elektrohandwerkzeugmaschine gemäß der Figur 1 oder 2;
- Figuren 5A und 5B: Schnittansichten des Aufnahmeabschnitts einer Elektrohandwerkzeugmaschine gemäß der Schnittlinien A-A und B-B der Figur 4;
- Figur 6: eine Seitenansicht des montierten Aufnahmemoduls einer Elektrohandwerkzeugmaschine gemäß der Figur 1 oder 2;
- Figur 7: eine Schnittansicht des Aufnahmeabschnitts einer Elektrohandwerkzeugmaschine gemäß der Schnittlinien C-C der Figur 6; und
- Figur 8: eine isometrische Ansicht einer alternativen erfindungsgemäßen Elektrowerkzeugmaschine in der Endmontage.

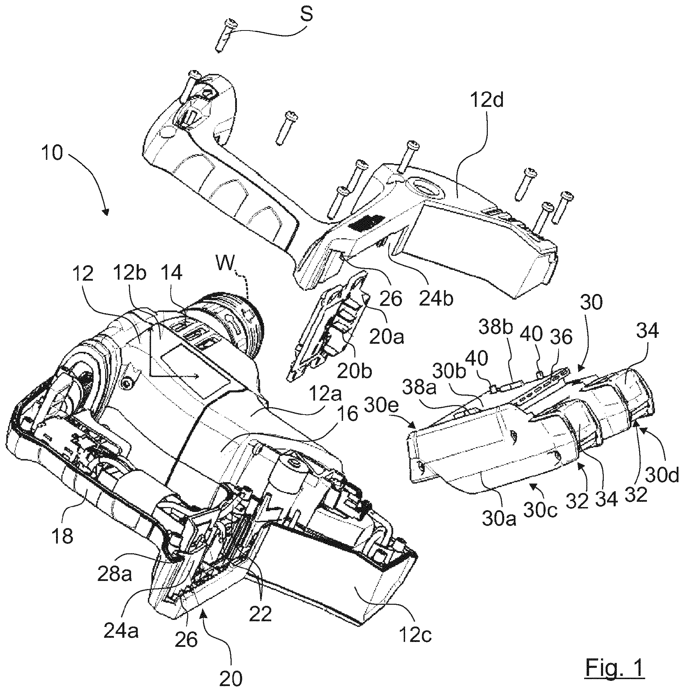

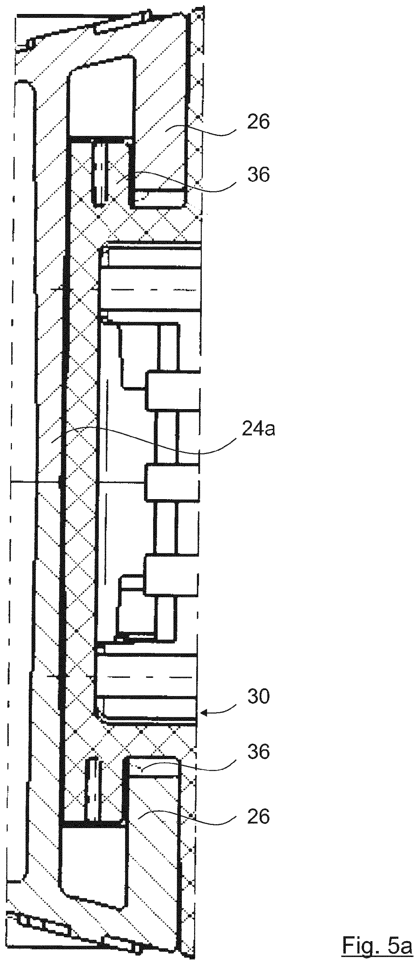

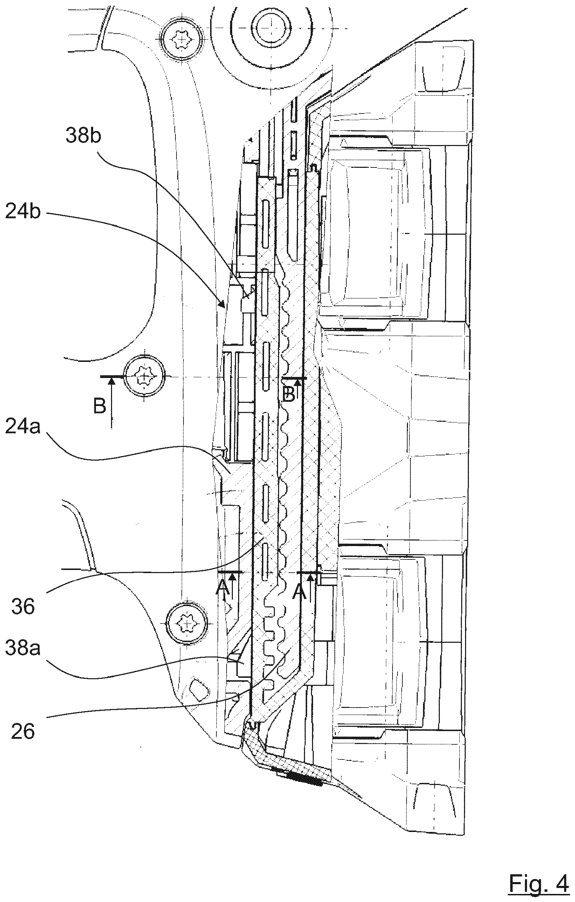

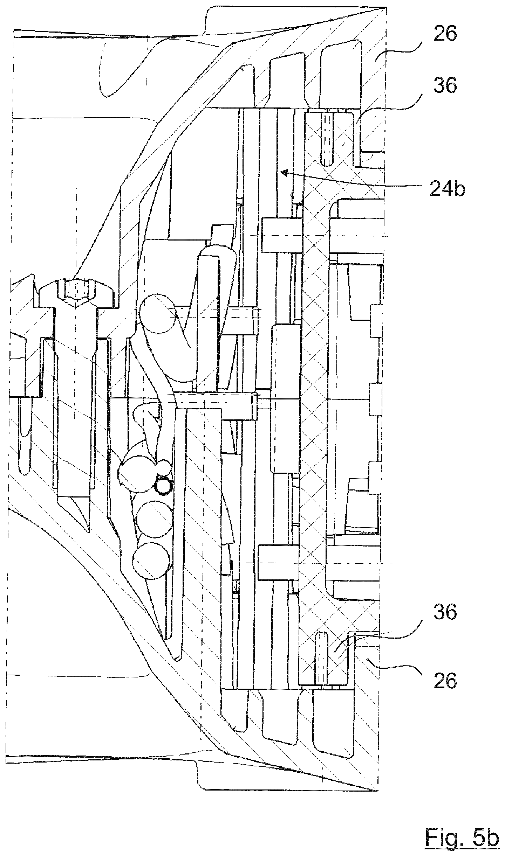

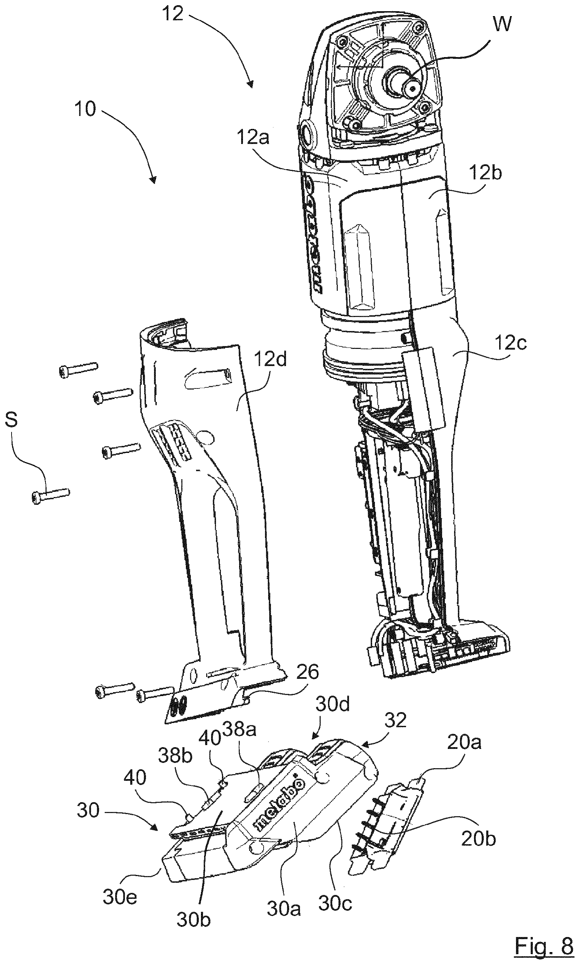

Die Figuren 1 bis 7 zeigen beispielhaft eine Elektrohandwerkzeugmaschine gemäß der vorliegenden Erfindung, die in der gezeigten Ausführungsform als Schrauber mit einem C-förmigen Handgriff ausgebildet ist. Eine alternative Ausgestaltung ist in der Figur 8 dargestellt, bei der die vorliegende Erfindung als Geradschleifer ausgestaltet ist. Identische Merkmale sind in den Figuren mit den gleichen Bezugszeichen bezeichnet. Selbstverständlich ist die vorliegende Erfindung aber auch in jeder anderen denkbaren Elektrohandwerkzeugmaschine umsetzbar.

Die Elektrohandwerkzeugmaschine ist allgemein mit dem Bezugszeichen 10 bezeichnet und umfasst ein Gehäuse 12, das zur Aufnahme diverser Komponenten (nicht bezeichnet) ausgebildet ist. Das Gehäuse 12 ist mehrteilig ausgebildet und umfasst die Gehäuseteile 12a-d, die gemeinsam ein geschlossenes Gehäuse 12 zur Aufnahme beispielsweise einer Antriebseinheit, einer Getriebeeinheit und der Elektronik der Elektrohandwerkzeugmaschine 10 in dessen Inneren ausbilden. Die Gehäuseteile können beispielsweise mittel Schrauben S miteinander festverbunden sein.

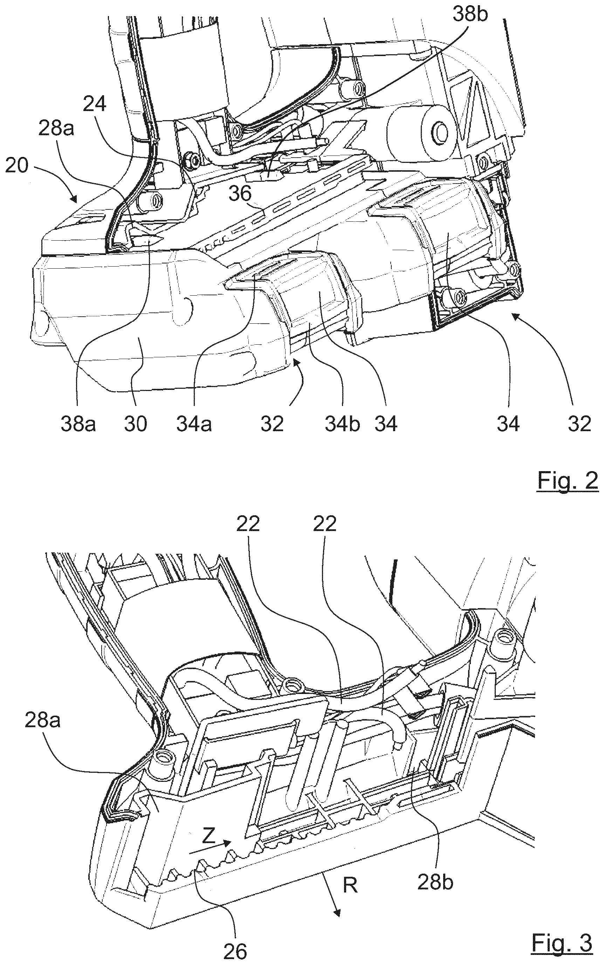

Das Gehäuse 12 umfasst Lüftungsschlitze 14, einen Aufnahmebereich 16 für die elektrische Antriebseinheit sowie einen als Griffteil 18 ausgebildeten Abschnitt. Unterhalb des Griffteils 18 ist der Aufnahmeabschnitt 20 vorgesehen, der zur Aufnahme eines Akkupacks A (in Figur 1 nicht gezeigt) ausgebildet ist. Der Aufnahmeabschnitt 20 umfasst eine Struktur zur mechanischen Befestigung des Akkupacks, auf die in Zusammenhang mit den nachfolgenden Figuren näher eingegangen wird, eine Gehäusewandung 24a und einen Durchbruch 24b der Gehäusewandung 24a, durch die elektrische Leitungen 22 (vgl. auch Figur 3) geführt werden können.

In der Darstellung der Figuren 1 und 8 ist das Gehäuseteil 12d noch nicht mit den restlichen Gehäuseteilen verbunden. Die Elektrohandwerkzeugmaschine 10 befindet sich in dem gezeigten Zustand in der Endmontage, wobei zu diesem Zeitpunkt bereits alle vorstehend genannten Komponenten in das Gehäuse 12 eingesetzt sind. Nun kann entschieden werden, mit wie vielen Akkupack-Aufnahmen die Elektrohandwerkzeugmaschine auf dem Markt verkauft werden soll.

Soll diese Maschine 10 nur einen üblichen Akkupack (d.h. einen Akkupack, der in den Aufnahmeabschnitt 20 passt) direkt aufnehmen können und nicht beispielsweise über weitere Funktionalitäten verfügen, die über die konventionellen durch die üblichen Komponenten der Werkzeugmaschine vorgegebenen hinausgehen, so wird der gezeigte Aufnahmeabschnitt 20 zusätzlich mit einer Kontaktplatte 20a versehen, die in diesen eingesetzt und fest an dem Gehäuse 12 befestigt wird. Die Kontaktplatte 20a weist elektrische Kontaktelemente in Form von Kontaktschwertern 20b auf, die im montierten Zustand einen elektrischen Kontakt zwischen einem eingesetzten Ackupack und der elektrischen Antriebseinheit herstellen können. Hierzu ist die Kontaktplatte 20a mittels elektrischen Leitungen 22 (vgl. auch Figur 3) mit der Antriebseinheit im montierten Zustand durch Festverdrahtung unlösbar elektrisch verbunden.

Soll die Elektrohandwerkzeugmaschine 10 indes einen von dem üblichen Akkupack abweichenden Akkupack oder zwei oder mehr Akkupacks direkt aufnehmen können und/oder weitere Funktionalitäten aufweisen, wie beispielsweise einen uni- oder bidirektionalen Datenaustausch, so wird der gezeigte Aufnahmeabschnitt 20 nicht mit der Kontaktplatte 20a versehen, sondern mit einem Aufnahmemodul 30, das in diesen eingesetzt und infolge seiner spezifischen Befestigungskontur an dem Gehäuse 12 unlösbar befestigt ist, wenn das Gehäuseteil 12d mit den restlichen Gehäuseteilen 12a-c verbunden ist.

Das gezeigte Aufnahmemodul 30 umfasst in der in den Figuren gezeigten Ausführungsform nur zwei Aufnahmevorrichtungen 32 zur Aufnahme eines Akkupacks. Selbstverständlich können an einem Aufnahmemodul jedoch auch weniger (d.h. eine) oder mehr als zwei Aufnahmevorrichtungen vorgesehen sein.

Es kann darüber hinaus vorgesehen sein, dass das Aufnahmemodul eine oder mehrere weitere Funktionseinheiten, beispielsweise zum Übertragen von Daten per Funksignal, zum Empfangen von Daten per Funksignal, oder zum Einlesen oder Auslesen von Daten über eine zusätzliche Schnittstelle, aufweist.

Auf diese Weise kann das Aufnahmemodul auch dazu genutzt werden, die Werkzeugmaschine mit weiteren Funktionen zu versehen. Bei einer solchen Ausgestaltung muss die Aufnahmevorrichtung des Aufnahmemoduls nicht zwingend von der ohnehin am Gehäuse der Werkzeugmaschine vorgesehenen abweichen.

Die Aufnahmevorrichtungen 32 umfassen jeweils einen Aufnahmeabschnitt mit Führungsschienen (nicht gezeigt), mittels derer ein Akkupack geführt in den Aufnahmeabschnitt eingeschoben werden kann und die diesen gegen ein Herausfallen sichern. Weiterhin ist eine Rasthalterung 34 vorgesehen, die den eingeschobenen Akkupack lösbar gegen eine unerwünschte Auszugsbewegung entlang der Führungsschienen sichert. Soll der aufgenommene Akkupack wieder aus der zugehörigen Aufnahmevorrichtung 32 des Aufnahmemoduls 30 gelöst werden, betätigt der Anwender die Rasthalterung 34 durch Drücken im Bereich 34a, wodurch ein Rastabschnitt 34b der Rasthalterung verschwenkt wird und das Akkupack wieder freigibt, so dass dieses entlang der Führungsschienen aus der Aufnahmevorrichtung 32 herausgezogen werden kann. Die Rasthalterung 34 kann federn in ihrer sichernden Position vorgespannt sein.

Weiterhin sind Kontaktelemente (nicht gezeigt) in gleicher oder zumindest ähnlicher Weise wie an der Kontaktplatte 20a vorgesehen, die eine elektrische Kontaktierung eines aufgeschobenen Akkupacks ermöglichen. Auch das Aufnahmemodul 30 wird mittels der elektrischen Leitungen 22 mit der elektrischen Antriebseinheit der Elektrohandwerkzeugmaschine unlösbar verbunden, um eine Stromversorgung über die aufgenommenen Akkupacks sicherzustellen.

Die aufgenommenen Akkupacks können über das Aufnahmemodul 30 in Reihe geschaltet sein. Zudem können Sicherungsmechanismen, wie sie aus dem Stand der Technik zum Verhindern von unerwünschten Tiefentladungen der Akkupacks oder unterwünschten Temperaturzuständen der Akkupacks bekannt sind, in gleicher Weise in das Aufnahmemodul integriert sein, wie Indikatoren, die den Anwender über solche unerwünschten Zustände informieren.

Das Aufnahmemodul 30 weist darüber hinaus eine spezifische Befestigungskontur auf, die auf die Ausgestaltung des Aufnahmeabschnitts 20 des Gehäuses 12 abgestimmt ist und eine einfache und unkomplizierte Montage ermöglicht. Dabei nutzt die Befestigungskontur ohnehin vorgesehene Vorsprünge bzw. Führungsschienen 26 im Aufnahmeabschnitt 20 sowie eine zusätzlich vorgesehene Ausnehmung 28a am Aufnahmeabschnitt 20 zur Herstellung einer unlösbaren mechanischen Verbindung des Aufnahmemoduls 30 mit dem Gehäuse 12.

Das Aufnahmemodul 30 umfasst zwei im wesentlichen parallele Seitenteile 30a, eine Oberseite 30b, die im montierten Zustand dem Gehäuse 12, insbesondere der Gehäusewandung 24a zugewandt ist, eine Unterseite 30c mit den Aufnahmevorrichtungen 32 und eine Vorder- und eine Rückseite 30d und 30e. Die Vorder- und Rückseite 30d und 30e bilden im monierten Zustand des Aufnahmemoduls 30 die Seiten, während eines der Seitenteile 30a in Richtung zu der Werkzeugspindel W, d.h. nach vorne, orientiert ist und das andere gegenüberliegende Seitenteil 30a nach hinten orientiert ist.

Die Befestigungskontur des Aufnahmemoduls 30 umfasst zwei Befestigungsstege 36, die seitlich von dem Aufnahmemodul 30 an der Vorder- und Rückseite 30d und 30e vorstehen. Weiterhin sind zwei rippenförmige Vorsprünge 38a und 38b an der Oberseite 30b vorgesehen, die zum Eingriff in die korrespondierende Ausnehmung 28a bzw. eine Ausnehmung 28b ausgebildet sind. Hierdurch wird die Positionierung des Aufnahmemoduls in axialer Richtung L (bezogen auf die durch die Führungsschienen 26 definierte Längsachse, vgl. Figur 3) relativ zu dem Gehäuse 12 festgelegt, während durch den Hintergriff der Führungsschienen 26 mittels der Befestigungsstege 36 die Positionierung in hierzu senkrechter Richtung R festgelegt wird.

Somit dient die spezifische Befestigungskontur zur Festlegung des Aufnahmemoduls in zwei nicht-parallelen Richtungen und ermöglicht in zusammengebauten Zustand der Elektrohandwerkzeugmaschine 10 eine unlösbare mechanische Verbindung des Aufnahmemoduls 30 mit dem Gehäuse 12. Die Montage ist dabei vergleichsweise einfach, da das Aufnahmemodul 30 in das vormontierte Gehäuse 12, wie in Figur 1 gezeigt seitlich in den (durch das fehlende Gehäuseteil 12d) geöffneten Aufnahmebereich 20 eingeschoben wird. Eine Ausrichtung in axialer Richtung wird dabei bereits durch die Vorsprünge 38a und 38b erreicht. Ist das Aufnahmemodul 30 vollständig eingeschoben erfolgt die feste Verdrahtung der elektrischen Leitungen 22 mit den zugehörigen Leitungen bzw. Anschlusskontakten 40 des Aufnahmemoduls 30 (die ihrerseits mit den elektrischen Kontakten der Aufnahmevorrichtungen 32 des Aufnahmemoduls 30 elektrisch verbunden sind). Danach wird das letzte Gehäuseteil 12d aufgesetzt und mittels Schrauben S fest mit dem restlichen Gehäuseteile 12a-c verbunden, wodurch zugleich eine Sicherung des Aufnahmemoduls 30 in Richtung R erfolgt. Die beidseitig angebrachten Befestigungsstege 36 können im fertig montierten Zustand beidseitig die Führungsschienen 26 im Inneren der Gehäuseteile 12c und 12d hintergreifen, wodurch ein Herausfallen des Aufnahmemoduls 30 bzw. ein Herausziehen in Richtung R unterbunden wird.

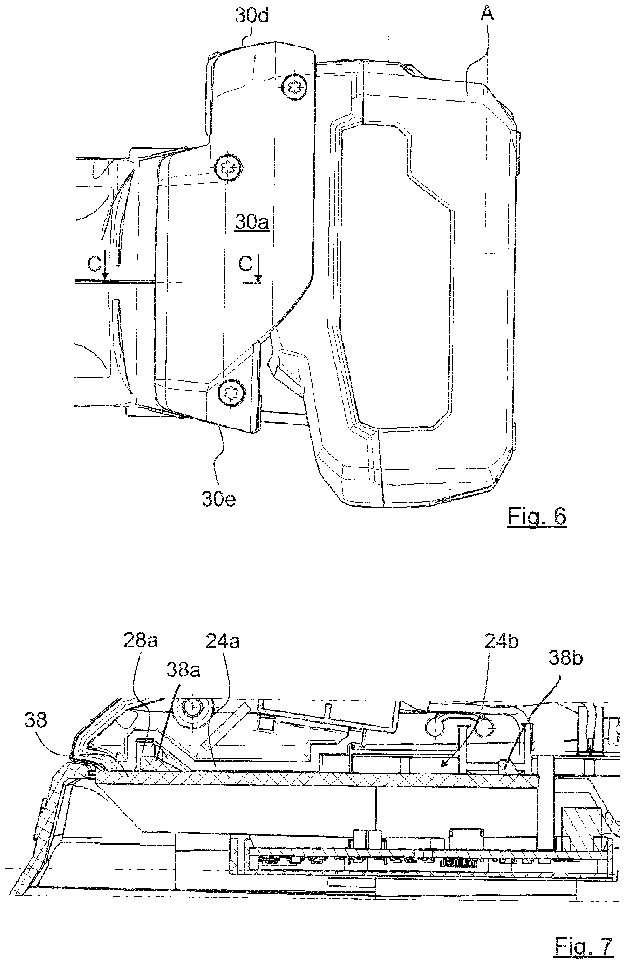

Schließlich können für den Gebrauch der Elektrohandwerkzeugmaschine 10 Akkupacks A in dem Aufnahmemodul 30 aufgenommen werden (vgl. Figur 6), welche die Stromversorgung der elektrischen Antriebseinheit der Elektrohandwerkzeugmaschine 10 sicherstellen.

Die Erfindung bietet die Möglichkeit, eine über eines oder mehrere Akkupacks mit Strom versorgte Elektrohandwerkzeugmaschine mit einer oder mehreren Akkupack-Aufnahmen zu versehen, ohne die Konstruktion der Gehäuseteile anpassen zu müssen. Die Entscheidung und Unterscheidung hinsichtlich der Anzahl an Akkuschnittstellen oder der Ausgestaltung der Akkuschnittstelle der Elektrohandwerkzeugmaschine sowie über die zur Verfügung stehenden Funktionseinheiten der Elektrohandwerkzeugmaschine wird erst bei deren Endmontage getroffen. Durch die feste Verdrahtung und die erst spät im Montageprozess stattfindende Variantengenerierung wird eine signifikante Kosteneinsparung gegenüber bekannten Lösungen erreicht.

Ein weiterer Vorteil besteht darin, dass zwischen das Aufnahmemodul 30 und das Gehäuse 12 schwingungsentkoppelt werden können, indem beispielsweise ein dämpfendes Zwischenelement oder Zwischenmaterial zwischen den Aufnahmeabschnitt 20 des Gehäuses 12 und das darin aufgenommene Aufnahmemodul 30 eingesetzt wird oder das Aufnahmemodul 30 teilweise, insbesondere im Kontaktbereich zum Gehäuse 12, aus einem solchen schwingungsdämpfenden Material hergestellt ist.

## Patentansprüche

1. Elektrohandwerkzeugmaschine (10) umfassend:
ein Gehäuse (12) mit wenigstens zwei Gehäuseteilen (12a, 12b, 12c, 12d), in dem zumindest teilweise eine Antriebseinheit zum Antrieb einer Werkzeugspindel der Elektrohandwerkzeugmaschine (10) aufgenommen ist,
einen Aufnahmeabschnitt (20), der zur lösbaren Aufnahme eines Akkupacks (A) ausgebildet ist und eine Struktur zur mechanischen Befestigung des Akkupacks (A) aufweist, wobei der Aufnahmeabschnitt (20) integral mit wenigstens einem Gehäuseteil (12c, 12d) ausgebildet ist,
**dadurch gekennzeichnet, dass** die Elektrohandwerkzeugmaschine (10) weiterhin ein separat von dem Gehäuse (12) ausgebildetes Aufnahmemodul (30) mit wenigstens einer Aufnahmevorrichtung (32) umfasst, die zur lösbaren Aufnahme eines Akkupacks (A) ausgebildet ist und ein aufgenommenes Akkupack (A) elektrisch mit der Antriebseinheit zu verbinden vermag,
wobei das Aufnahmemodul (30) eine spezifische Befestigungskontur aufweist, die auf die Ausgestaltung des Aufnahmeabschnitts des Gehäuses abgestimmt ist, und für den Anwender im montierten Zustand der Elektrohandwerkzeugmaschine unlösbar elektrisch mit der Antriebseinheit und mechanisch mit dem Gehäuse (12) verbunden ist.

2. Elektrohandwerkzeugmaschine (10) nach Anspruch 1,
**dadurch gekennzeichnet, dass** das Aufnahmemodul eine oder mehrere weitere Funktionseinheiten aufweist, beispielsweise zum Senden und/oder Empfangen von Daten per Funksignal oder zum Ein- und/ oder Auslesen von Daten über eine zusätzliche Schnittstelle.

3. Elektrohandwerkzeugmaschine (10) nach Anspruch 1 oder 2,
**dadurch gekennzeichnet, dass** das Gehäuse (12) im Bereich des Aufnahmeabschnitts (20) wenigstens zwei Vorsprünge, insbesondere zwei Führungsschienen (26), umfasst, die zur lösbaren Aufnahme und Befestigung eines Akkupacks (A) dienen, und dass das Aufnahmemodul (30) eine Befestigungskontur aufweist, die im montierten Zustand zur formschlüssigen Befestigung an dem Gehäuse (12) mit den wenigstens zwei Vorsprüngen des Aufnahmeabschnitts (20) des Gehäuses (12) zusammenwirkt.

4. Elektrohandwerkzeugmaschine (10) nach Anspruch 3,
**dadurch gekennzeichnet, dass** die Befestigungskontur wenigstens einen teilweise umlaufenden Befestigungssteg (36) umfasst, der im montierten Zustand die wenigstens zwei Vorsprünge des Aufnahmeabschnitts (20) zu hintergreifen vermag, um auf diese Weise eine Lösebewegung des Aufnahmemoduls (30) in eine erste Richtung (R) zu unterbinden.

5. Elektrohandwerkzeugmaschine (10) nach Anspruch 4,
**dadurch gekennzeichnet, dass** die Befestigungskontur wenigstens einen Vorsprung (38) umfasst, der im montierten Zustand in eine Vertiefung (28) des Gehäuses (12) im Bereich des Aufnahmeabschnitts (20) einzugreifen vermag, um auf diese Weise eine Lösebewegung des Aufnahmemoduls (30) in eine zweite Richtung (L) zu unterbinden.

6. Elektrohandwerkzeugmaschine (10) nach einem der vorhergehenden Ansprüche,
**dadurch gekennzeichnet, dass** die wenigstens eine Aufnahmevorrichtung (32) des Aufnahmemoduls (30) elektrische Kontakte zur elektrischen Verbindung des aufgenommenen Akkupacks (A) aufweist, die im montierten Zustand der Elektrohandwerkzeugmaschine (10) elektrisch mit der Antriebseinheit verbunden sind.

7. Elektrohandwerkzeugmaschine (10) nach Anspruch 6,
**dadurch gekennzeichnet, dass** das Gehäuse (12) im Bereich des Aufnahmeabschnitts (20) wenigstens einen Durchbruch (24b) umfasst, durch den sich im montierten Zustand wenigstens eine elektrische Leitung (22) zur elektrischen Verbindung mit den elektrischen Kontakten des Aufnahmemoduls (30) erstrecken kann.

8. Elektrohandwerkzeugmaschine (10) nach einem der vorhergehenden Ansprüche,
**dadurch gekennzeichnet, dass** die wenigstens eine Aufnahmevorrichtung (32) des Aufnahmemoduls (30) wenigstens zwei Vorsprünge, insbesondere zwei Führungsschienen, umfasst, die zur lösbaren Aufnahme und Befestigung eines zugeordneten Akkupacks (A) dienen.

9. Verfahren zum Herstellen einer Elektrohandwerkzeugmaschine (10) mit den Merkmalen wenigstens eines der vorherigen Ansprüche umfassend die Schritte:
Einsetzen derjenigen Komponenten der Elektrohandwerkzeugmaschine (10) in wenigstens ein erstes Gehäuseteil (12a, 12b, 12c) der Elektrohandwerkzeugmaschine (10), die im späteren Gebrauch im Gehäuse (12) der Elektrohandwerkzeugmaschine (10) wenigstens teilweise aufgenommen sind;
Einsetzen eines Aufnahmemoduls (30) in den Aufnahmeabschnitt des Gehäuses (12);
Herstellen einer elektrischen Verbindung des Aufnahmemoduls (30) mit der Antriebseinheit der Elektrohandwerkzeugmaschine (10);
Herstellen einer mechanischen Verbindung des Aufnahmemoduls (30) mit dem Gehäuse (12) der Elektrohandwerkzeugmaschine (10),
**dadurch gekennzeichnet, dass** die elektrische Verbindung und die mechanische Verbindung für den Anwender im montierten Zustand der Elektrohandwerkzeugmaschine unlösbar ist.

10. Verfahren nach Anspruch 9,
**dadurch gekennzeichnet, dass** der Schritt Herstellen einer elektrischen Verbindung die nachfolgenden Teilschritte umfasst:
Herausführen wenigstens einer elektrischen Leitung (22) durch einen Durchbruch (24b) der Gehäusewand (24a) im Bereich des Aufnahmeabschnitts (20);
Verbinden, insbesondere Festverdrahten der wenigstens einen elektrischen Leitung (22) mit wenigstens einer Anschlussleitung des Aufnahmemoduls (30), um eine elektrische Verbindung der elektrischen Kontaktelemente des Aufnahmemoduls mit der Antriebseinheit der Elektrohandwerkzeugmaschine herzustellen.

11. Verfahren nach Anspruch 9 oder 10,
**dadurch gekennzeichnet, dass** der Schritt Herstellen einer mechanischen Verbindung die nachfolgenden Teilschritte umfasst:
Einführen der Befestigungskontur des Aufnahmemoduls (30) in den Aufnahmeabschnitt (20) wenigstens eines Gehäuseteils (12c);
Verbinden, insbesondere Verschrauben, des wenigstens zweiten Gehäuseteils (12d) mit dem wenigstens einen weiteren Gehäuseteil (12c), so dass die Befestigungskontur des Aufnahmemoduls (30) im montierten Zustand der Elektrohandwerkzeugmaschine (10) mit wenigstens zwei Vorsprüngen, insbesondere zwei Führungsschienen (26), des Aufnahmeabschnitts (20), die zur lösbaren Aufnahme und Befestigung eines Akkupacks (A) dienen, zur formschlüssigen Befestigung an dem Gehäuse (12) zusammenwirken kann.

## Claims

1. An electric hand-held machine tool (10) comprising:
a housing (12) having at least two housing parts (12a, 12b, 12c, 12d), in which a drive unit for driving a tool spindle of the electric hand-held machine tool (10) is at least partially accommodated,
a receiving section (20) which is designed for detachably receiving a battery pack (A) and has a structure for mechanically fastening the battery pack (A), the receiving section (20) being formed integrally with at least one housing part (12c, 12d)
**characterized in that** the power hand tool (10) further comprises a receiving module (30) formed separately from the housing (12) and having at least one receiving device (32) adapted to detachably receive a battery pack (A) and to electrically connect a received battery pack (A) to the drive unit,
wherein the receiving module (30) has a specific fastening contour which is matched to the design of the receiving section of the housing, and is non-detachably connected electrically to the drive unit and mechanically to the housing (12) for the user in the assembled state of the electric hand-held machine tool.

2. The electric hand-held machine tool (10) according to claim 1,
**characterized in that** the recording module has one or more further functional units, for example for transmitting and/or receiving data by radio signal or for reading in and/or out data via an additional interface.

3. The electric hand-held machine tool (10) according to claim 1 or 2,
**characterized in that** the housing (12) comprises, in the region of the receiving section (20), at least two projections, in particular two guide rails (26), which serve for detachably receiving and fastening a battery pack (A), and **in that** the receiving module (30) has a fastening contour which, in the assembled state, interacts with the at least two projections of the receiving section (20) of the housing (12) for positive fastening to the housing (12).

4. The electric hand-held machine tool (10) according to claim 3,
**characterized in that** the fastening contour comprises at least one partially circumferential fastening web (36) which, in the assembled state, is capable of engaging behind the at least two projections of the receiving section (20), in order in this way to prevent a release movement of the receiving module (30) in a first direction (R).

5. The electric hand-held machine tool (10) according to claim 4,
**characterized in that** the fastening contour comprises at least one projection (38) which, in the assembled state, is capable of engaging in a depression (28) of the housing (12) in the region of the receiving section (20), in order in this way to prevent a release movement of the receiving module (30) in a second direction (L).

6. The electric hand-held machine tool (10) according to any one of the preceding claims,
**characterized in that** the at least one receiving device (32) of the receiving module (30) has electrical contacts for the electrical connection of the received battery pack (A), which contacts are electrically connected to the drive unit in the assembled state of the electric hand-held machine tool (10).

7. The electric hand-held machine tool (10) according to claim 6,
**characterized in that** the housing (12) comprises, in the region of the receiving section (20), at least one aperture (24b) through which, in the assembled state, at least one electrical line (22) can extend for electrical connection to the electrical contacts of the receiving module (30).

8. The electric hand-held machine tool (10) according to any one of the preceding claims,
**characterized in that** the at least one receiving device (32) of the receiving module (30) comprises at least two projections, in particular two guide rails, which serve to detachably receive and fasten an associated battery pack (A).

9. A method of manufacturing an electric hand-held machine tool (10) having the features of at least one of the previous claims comprising the steps:
inserting those components of the power hand tool (10) into at least a first housing part (12a, 12b, 12c) of the electric hand-held machine tool (10) which are at least partially accommodated in the housing (12) of the electric hand-held machine tool (10) in subsequent use;
inserting a receiving module (30) into the receiving portion of the housing (12);
establishing an electrical connection of the receiving module (30) to the drive unit of the electric hand-held machine tool (10);
making a mechanical connection of the receiving module (30) to the housing (12) of the electric hand-held machine tool (10),
**characterized in that** the electrical connection and the mechanical connection are undetachable for the user in the assembled state of the electric hand-held machine tool.

10. The method according to claim 9,
**characterized in that** the step of establishing an electrical connection comprises the following sub-steps:
leading at least one electrical lead (22) out through an opening (24b) in the housing wall (24a) in the region of the receiving section (20);
connecting, in particular hardwiring, the at least one electrical lead (22) to at least one connecting lead of the receptacle module (30) in order to establish an electrical connection of the electrical contact elements of the receptacle module to the drive unit of the electric hand-held machine tool.

11. The method according to claim 9 or 10,
**characterized in that** the step of establishing a mechanical connection comprises the following sub-steps:
inserting the fastening contour of the receiving module (30) into the receiving section (20) of at least one housing part (12c);
connecting, in particular screwing, the at least second housing part (12d) to the at least one further housing part (12c), so that, in the assembled state of the electric hand-held machine tool (10), the fastening contour of the receiving module (30) can interact with at least two projections, in particular two guide rails (26), of the receiving section (20), which serve for releasably receiving and fastening a battery pack (A), for positive fastening to the housing (12).

## Revendications

1. Une machine-outil électrique à main (10) comprenant :
un boîtier (12) avec au moins deux parties de boîtier (12a, 12b, 12c, 12d), dans lequel est logée au moins partiellement une unité d'entraînement pour entraîner une broche d'outil de la machine-outil électrique à main (10),
une section de réception (20) qui est conçue pour recevoir de manière amovible un bloc d'accumulateurs (A) et qui présente une structure pour la fixation mécanique du bloc d'accumulateurs (A), la section de réception (20) étant conçue de manière intégrale avec au moins une partie de boîtier (12c, 12d),
**caractérisé en ce que** la machine-outil électrique à main (10) comprend en outre un module de réception (30) formé séparément du boîtier (12) et comportant au moins un dispositif de réception (32) qui est conçu pour recevoir de manière amovible un bloc de batterie (A) et qui est capable de relier électriquement un bloc de batterie (A) reçu à l'unité d'entraînement,
le module de réception (30) présentant un contour de fixation spécifique, adapté à la configuration de la section de réception du boîtier, et étant relié électriquement à l'unité d'entraînement et mécaniquement au boîtier (12) de manière inamovible pour l'utilisateur lorsque la machine-outil électrique à main est montée.

2. La machine-outil électrique à main (10) selon la revendication 1,
**caractérisé en ce que** le module d'enregistrement présente une ou plusieurs autres unités fonctionnelles, par exemple pour l'émission et/ou la réception de données par signal radio ou pour la lecture et/ou l'enregistrement de données via une interface supplémentaire.

3. La machine-outil électrique à main (10) selon la revendication 1 ou 2,
**caractérisé en ce que** le boîtier (12) comprend, dans la zone de la section de réception (20), au moins deux saillies, en particulier deux rails de guidage (26), qui servent à la réception et à la fixation amovibles d'un bloc d'accumulateurs (A), et **en ce que** le module de réception (30) présente un contour de fixation qui, à l'état monté, coopère avec les au moins deux saillies de la section de réception (20) du boîtier (12) pour une fixation par complémentarité de forme sur le boîtier (12).

4. La machine-outil électrique à main (10) selon la revendication 3,
**caractérisé en ce que** le contour de fixation comprend au moins une barrette de fixation (36) partiellement périphérique qui, à l'état monté, est apte à s'engager derrière les au moins deux saillies de la section de réception (20), afin d'empêcher de cette manière un mouvement de libération du module de réception (30) dans une première direction (R).

5. La machine-outil électrique à main (10) selon la revendication 4,
**caractérisé en ce que** le contour de fixation comprend au moins une saillie (38) qui, à l'état monté, peut s'engager dans un renfoncement (28) du boîtier (12) dans la zone de la section de réception (20), afin d'empêcher de cette manière un mouvement de détachement du module de réception (30) dans une deuxième direction (L).

6. La machine-outil électrique à main (10) selon l'une des revendications précédentes,
**caractérisé en ce que** le au moins un dispositif de réception (32) du module de réception (30) présente des contacts électriques pour la connexion électrique du bloc d'accumulateurs (A) reçu, qui sont reliés électriquement à l'unité d'entraînement à l'état monté de la machine-outil électrique à main (10).

7. La machine-outil électrique à main (10) selon la revendication 6,
**caractérisé en ce que** le boîtier (12) comprend, dans la zone de la section de réception (20), au moins un passage (24b) à travers lequel peut s'étendre, à l'état monté, au moins une ligne électrique (22) pour la liaison électrique avec les contacts électriques du module de réception (30).

8. La machine-outil électrique à main (10) selon l'une des revendications précédentes,
**caractérisé en ce que** le au moins un dispositif de réception (32) du module de réception (30) comprend au moins deux saillies, en particulier deux rails de guidage, qui servent à recevoir et à fixer de manière amovible un bloc d'accumulateurs (A) associé.

9. Un procédé de fabrication d'une machine-outil électrique à main (10) présentant les caractéristiques d'au moins une des revendications précédentes, comprenant les étapes suivantes :
mise en place dans au moins une première partie de boîtier (12a, 12b, 12c) de la machine-outil électrique à main (10) des composants de la machine-outil électrique à main (10) qui, lors de l'utilisation ultérieure, sont logés au moins partiellement dans le boîtier (12) de la machine-outil électrique à main (10) ;
insertion d'un module de réception (30) dans la section de réception du boîtier (12) ;
réalisation d'une connexion électrique du module de réception (30) avec l'unité d'entraînement de la machine-outil électrique à main (10) ;
réalisation d'une liaison mécanique du module de réception (30) avec le boîtier (12) de la machine-outil électrique à main (10),
**caractérisé en ce que** la connexion électrique et la connexion mécanique sont indémontables pour l'utilisateur lorsque la machine-outil électrique portative est montée.

10. Le procédé selon la revendication 9,
**caractérisé en ce que** l'étape de réalisation d'une connexion électrique comprend les étapes partielles suivantes :
sortie d'au moins un câble électrique (22) à travers une ouverture (24b) de la paroi du boîtier (24a) dans la zone de la section de réception (20) ;
connexion, en particulier câblage fixe, de la au moins une ligne électrique (22) avec au moins une ligne de raccordement du module de réception (30), afin d'établir une connexion électrique des éléments de contact électrique du module de réception avec l'unité d'entraînement de l'outil électrique à main.

11. Le procédé selon la revendication 9 ou 10,
**caractérisé en ce que** l'étape d'établissement d'une connexion mécanique comprend les sous-étapes suivantes :
introduction du contour de fixation du module de réception (30) dans la section de réception (20) d'au moins une partie de boîtier (12c) ;
assemblage, en particulier vissage, de la au moins deuxième partie de boîtier (12d) avec la au moins une autre partie de boîtier (12c), de sorte que le contour de fixation du module de réception (30) puisse coopérer, à l'état monté de la machine-outil électrique à main (10), avec au moins deux saillies, en particulier deux rails de guidage (26), de la section de réception (20), qui servent à la réception et à la fixation amovibles d'un bloc d'accumulateurs (A), pour une fixation par complémentarité de formes sur le boîtier (12).
